# FASCICULE DE BREVET EUROPEEN

(11) **EP 3 642 046 B1**
(45) Date de publication et mention de la délivrance du brevet: **06.10.2021**
(21) Numéro de dépôt: 18740903.2
(22) Date de dépôt: 19.06.2018
(51) Int. Cl.: B60B 9/26, B60C 7/18, B60C 7/14

(54) **ROUE NON-PNEUMATIQUE COMPRENANT UNE STRUCTURE DE RENFORT CIRCONFERENTIELLE**
NICHT-PNEUMATISCHES RAD MIT UMFANGSVERSTÄRKUNGSSTRUKTUR
NON-PNEUMATIC WHEEL COMPRISING A CIRCUMFERENTIAL REINFORCEMENT STRUCTURE

(30) Priorité: 20.06.2017 FR 1770651; 15.12.2017 FR 1762213
(43) Date de publication de la demande: 29.04.2020
(73) Titulaire: Compagnie Générale des Etablissements Michelin, 63000 Clermont-Ferrand (FR)
(72) Inventeur: MERINO LOPEZ, Jos, 63040 Clermont-Ferrand Cedex 09 (FR); PATAUT, Gael, 63040 Clermont-Ferrand Cedex 09 (FR); RIGO, Sébastien, 63040 Clermont-Ferrand Cedex 09 (FR)
(74) Mandataire: Desbordes, Guillaume
(86) Numéro de dépôt international: PCT/IB2018/054503
(87) Numéro de publication internationale: WO 2018/234989

(56) Documents cités:
- EP-A2- 0 853 009
- WO-A1-2010/115861
- WO-A1-2013/095499
- WO-A1-2017/013575
- WO-A1-2019/077289
- WO-A1-2019/077290
- US-A- 3 730 244
- US-B1- 6 405 773

## Description

### DOMAINE TECHNIQUE DE L'INVENTION

La présente invention concerne des éléments de renfort pour une roue non-pneumatique. Elle concerne plus particulièrement des éléments architecturaux de sommet de cette roue.

### ETAT DE LA TECHNIQUE ANTERIEURE

Le pneumatique conventionnel, dont le fonctionnement normal requiert qu'il soit gonflé, est une solution bien connue permettant de satisfaire des exigences sévères en terme de confort, de masse, de résistance au roulement, etc. Ce type de pneumatique comporte toutefois plusieurs inconvénients liés à sa structure, tel que la complexité, les besoins d'entretien et les risques d'endommagement, en particulier de crevaison. Pour pallier à certains de ces inconvénients, des roues non-pneumatiques ont été développées depuis plusieurs années déjà. Des exemples de roues non-pneumatiques sont présentés dans les documents suivants: WO 2013/095499, US6,769,465, US6,994,134 et US7,013,939 par exemple. Certaines roues non-pneumatiques comportent un anneau périphérique, désigné en anglais par le terme « shear band », comme par exemple US7,201,194. De telles architectures permettent l'obtention de certaines performances sans devoir subir la contrainte inhérente au gonflage des pneumatiques conventionnels.

Par exemple, le document US6,769,465 concerne un pneumatique de type résilient supportant une charge sans pression interne. Il comporte une portion de contact avec le sol, des parois latérales s'étendant de la portion de contact vers des bourrelets adaptés pour maintenir le pneumatique à une roue. Une bande annulaire renforcée est prévue intérieurement à la bande de roulement. Cette bande comporte au moins une couche homogène et deux membranes, soit une de chaque côté de la couche homogène. Chaque membrane dispose d'un module d'extension supérieur au module dynamique de la couche homogène, de sorte que, lorsque la roue supporte une charge, la portion qui contacte le sol se déforme pour produire une surface de contact avec le sol. Une telle architecture implique un déplacement relatif des différentes couches lors de la mise à plat. Cette construction est par ailleurs complexe et relativement coûteuse à produire.

Le document EP0853009 décrit un pneumatique de type « run flat » comportant un anneau de renfort interne destiné à augmenter la rigidité du pneumatique en particulier lors des phases de roulage en mode dégradé.

Les documents WO 2017/013575 et WO 2010/115861 décrivent des pneumatiques comportant des renforts constitués d'un film thermoplastique.

Il subsiste donc un besoin pour une roue de type non-pneumatique permettant l'obtention de performances satisfaisantes, avec une architecture qui soit plus simple, et présente une durabilité accrue. Il subsiste aussi un besoin pour une roue non-pneumatique présentant des caractéristiques améliorées de résistance au roulement.

Pour pallier ces différents inconvénients, notamment la complexité de réalisation et la fragilité de certaines zones du sommet, l'invention prévoit différents moyens techniques.

### EXPOSE DE L'INVENTION

Tout d'abord, un premier objectif de l'invention consiste à prévoir une roue non-pneumatique disposant de performances améliorées.

Un autre objectif de l'invention consiste à prévoir un agencement de renforts de sommet susceptible d'être mis en forme selon une vaste panoplie de variantes, permettant ainsi d'adapter les caractéristiques du sommet en fonction du type de pneumatique.

Un autre objectif de l'invention consiste à simplifier l'architecture ainsi que le processus de fabrication, en particulier au niveau de la zone du sommet.

Pour ce faire, l'invention prévoit une roue non-pneumatique telle que définie dans les revendications indépendantes 1 et 3.

Une telle architecture permet de simplifier la zone sommet, d'obtenir une zone de renfort très compacte tout en procurant d'importantes réductions de poids. Le nombre de couches superposées radialement et leur agencement respectif permet d'optimiser l'endurance de la zone sommet. Le procédé de fabrication est simple à mettre en œuvre. Enfin, cette architecture permet de réduire la résistance au roulement du fait de l'agencement simplifié, optimisé et aminci.

La structure de renfort annulaire comprend N couches superposées radialement, N étant supérieur à trois, un axe virtuel C-C sensiblement perpendiculaire aux bandelettes coupe au moins N-1 bandelettes en toute position axiale dudit axe virtuel dans la structure de renfort annulaire. Par exemple, avec quatre couches de bandelettes superposées radialement, tout axe perpendiculaire traverse au moins trois bandelettes. Ce mode de réalisation procure une zone de sommet particulièrement homogène, ce qui permet l'obtention de qualités dynamiques avantageuses, comme par exemple une excellente résistance des matériaux même en cas de roulage sévère, en particulier en dérive. Avec quatre couches de bandelettes, les bandelettes de chaque couche de bandelettes superposées radialement recouvrent les bandelettes de la couche de bandelettes qui lui est radialement intérieure d'au moins 20% et d'au plus 80%.

Selon un autre mode de réalisation avantageux, la structure de renfort annulaire comprend N couches superposées radialement, N étant supérieur à trois, un axe virtuel C-C sensiblement perpendiculaire aux bandelettes coupant un nombre de bandelettes supérieur à N/2 en toute position axiale dudit axe virtuel dans la structure de renfort annulaire.

De manière avantageuse, le recouvrement moyen entre les bandelettes des deux couches voisines superposées radialement est supérieur à 20%, et de préférence est supérieur à 40%. Avantageusement, les bandelettes de renfort sont constituées d'un film thermoplastique présentant un module supérieur
à 6 GPa, dans la direction principale et dans la direction transverse.

Selon un mode de réalisation avantageux, le recouvrement moyen entre les bandelettes de deux couches voisines superposées radialement est inférieur à 90%.

Selon un mode de réalisation avantageux, le rapport de forme longueur/largeur et largeur/épaisseur du film thermoplastique est supérieur ou égal à 5.

Selon un mode de réalisation avantageux, le film thermoplastique est composé de polyester bi-étiré ou mono-étiré stabilisé thermiquement ou de polyamide.

Selon la revendication indépendante 3 les bandelettes sont intégrées dans une matrice constituée d'un mélange élastomère, de préférence diénique. Ladite matrice présente une composition de caoutchouc qui présente, à l'état réticulé, un module sécant en extension à 10% d'allongement supérieur ou égal à 10 MPa, les bandelettes de renfort étant constituées par un stratifié d'au moins 3 couches composites, chaque couche composite comprenant des fibres à haut module orientées, parallèles entre elles et formant un angle α avec la direction circonférentielle, enrobées d'une matrice polymérique.

Dans un exemple de réalisation, le mélange élastomère de la matrice présente un module à 10% d'allongement compris entre 3 et 20 MPa.

Dans un autre exemple de réalisation, le mélange élastomère de la matrice présente un module à 10% d'allongement supérieur à 20 MPa.

Selon encore un mode de réalisation avantageux, la matrice de mélange élastomère comprend des renforts filaires circonférentiels intégrés dans ladite matrice.

En variante, les bandelettes comprennent des renforts filaires circonférentiels intégrés dans le film thermoplastique constitutif des bandelettes.

Selon encore une autre variante de réalisation, les bandelettes sont de type composite, et comprennent un film thermoplastique et un alignement de fils de renfort agencé au voisinage du film thermoplastique, l'ensemble étant intégré dans une matrice de mélange élastomère, de préférence diénique.

De manière avantageuse, une bande de roulement est positionnée radialement extérieurement à la structure de renfort annulaire.

Également de manière avantageuse, la roue comprend par ailleurs une pluralité de bâtons agencés radialement intérieurement de la structure de renfort annulaire, lesdits bâtons étant configurés afin de transmettre une tension lorsqu'une charge est appliquée à la roue.

Selon un mode de réalisation avantageux, la roue, comprend par ailleurs un hub, et les bâtons s'étendent radialement entre ledit hub et la structure de renfort annulaire.

Selon un autre mode de réalisation avantageux, la structure de renfort annulaire et la bande de roulement sont conjointement formées.

De manière avantageuse, les bâtons et la structure de renfort annulaire sont conjointement formés.

De manière avantageuse, l'interface entre les bandelettes et le mélange élastomère de matrice prévoit un élément adhésif.

Les bandelettes sont disposées côte-à-côte pour constituer un alignement. La roue non-pneumatique selon l'invention comprend avantageusement au moins trois alignements de bandelettes.

### DESCRIPTION DES FIGURES

Tous les détails de réalisation sont donnés dans la description qui suit, complétée par les figures 1 à 11 présentées uniquement à des fins d'exemples non limitatifs, et dans lesquelles:
- la figure 1 est une représentation schématique d'une roue non-pneumatique ;
- la figure 2 est une vue en coupe de la roue de la figure 1 ;
- la figure 3 est une représentation schématique d'un exemple de structure de renfort selon l'invention, comportant trois alignements de bandelettes;
- les figures 4 et 5 sont des représentations schématiques d'autres exemples de structure de renfort selon l'invention, comportant quatre alignements de bandelettes;
- les figures 6 et 7 sont des représentations schématiques d'autres exemples de structure de renfort, comportant un alignement de câbles de renfort en plus des couches de bandelettes telles que celles de la figure 5;
- la figure 8A est une représentation schématique d'un exemple de bandelette composite selon l'invention constituée de câbles textiles de renfort, de bandelettes thermoplastiques et d'une matrice diénique ;
- la figure 8B est une représentation schématique d'une variante de bandelette composite dans laquelle l'agencement des câbles textiles et des bandelettes thermoplastiques est inversé ;
- la figure 9 est une représentation schématique d'une bandelette composite à deux éléments dans laquelle les câbles textiles de renfort sont intégrés dans une bandelette thermoplastique ;
- la figure 10 est une représentation schématique d'un exemple de structure de renfort dans laquelle des bandelettes composites sont alignées ;
- la figure 11 est une vue en coupe d'un exemple de réalisation d'une bandelette conforme à l'invention constituée d'un stratifié de 7 couches composites.

### DESCRIPTION DETAILLEE DE L'INVENTION

Dans le présent document, par «recouvrement de bandelettes », ou chevauchement, on entend un agencement dont les bandelettes d'une couche radialement extérieure recouvrent les bandelettes de la couche radialement intérieure, c'est-à-dire que la projection dans la direction radiale d'une bandelette sur la bandelette de niveau inférieur est non nulle. Le pourcentage de recouvrement peut varier selon les modes de réalisation. Ce recouvrement forme un couplage entre les couches générant une cohésion de l'ensemble de la zone de renfort du sommet. Ce couplage permet en particulier une transmission d'efforts de cisaillement entre les couches.

Par « direction longitudinale » ou « direction circonférentielle », on entend une direction qui correspond à la périphérie de la roue et qui est définie par la direction de roulement de la roue.

Par « direction axiale », on entend une direction parallèle à l'axe de roulement de la roue.

Par « bande de roulement », on entend une quantité de mélange élastomère délimitée par des surfaces latérales et par deux surfaces principales dont l'une est destinée à entrer en contact avec une chaussée lorsque la roue tourne.

On mesure en seconde élongation (i.e., après un cycle d'accommodation au taux d'extension prévu pour la mesure elle-même) les modules sécants nominaux (ou contrainte apparente, en MPa) à 10% d'allongement (notés MA 10) et à 100% d'allongement (notés MA 100) à 23°C ± 2°C, et dans les conditions normales d'hygrométrie.

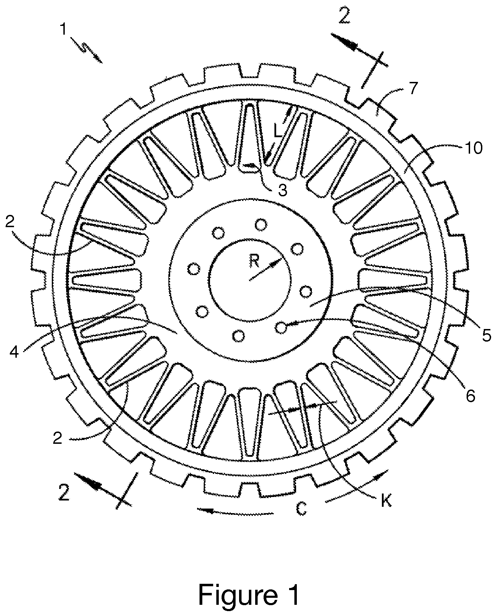

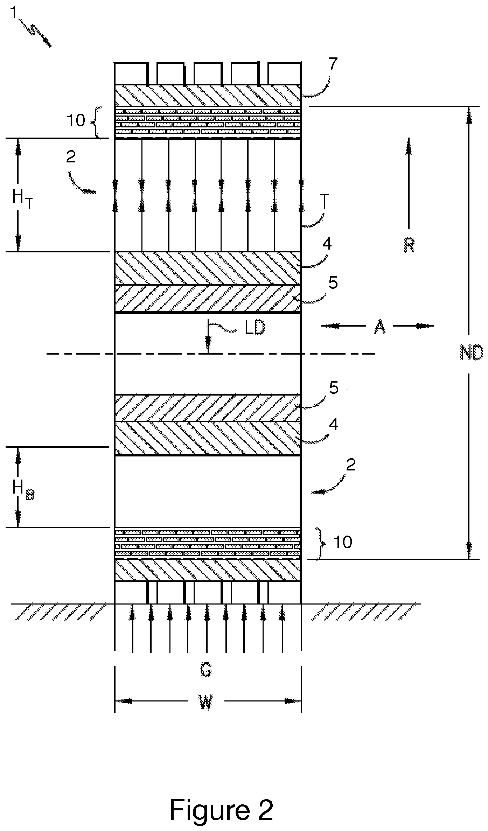

La figure 1 est un exemple d'une roue non-pneumatique 1 susceptible de comporter une structure de renfort annulaire 10 selon l'invention. La figure 2 illustre la même roue en coupe transversale selon la ligne 2-2 de la figure 1. La roue, telle qu'illustrée aux figures 1 et 2, comporte une pluralité de bâtons 2 (ou rayons), et une structure de renfort annulaire 10. Les bâtons 2 s'étendent dans une direction radiale, du centre vers l'extérieur de la roue, jusqu'à la structure de renfort annulaire 10.

La largeur des bâtons dépend des modes de réalisation. Elle peut par exemple correspondre à la largeur W de la roue, ou être inférieure à celle-ci. La forme des bâtons peut aussi varier selon les modes de réalisation.

Les bâtons 2 sont connectés à un anneau central de montage 4 au niveau de la portion radialement intérieure 3 des rayons 2. Cet anneau central de montage 4 procure une fixation de la roue à un hub 5. Des trous de montage 6, prévus dans le hub 5, permettent de monter et fixer la roue sur un axe d'un véhicule. La roue 1 peut être montée sur un hub préalablement prévu, ou encore être fabriquée intégralement avec le hub 5. Dans un exemple de mise en œuvre, la roue est fabriquée avec les bâtons 2, l'anneau central de montage 4 et le hub 5 sont moulés conjointement.

Une bande de roulement 7, de préférence en mélange élastomère, est prévue à la périphérie de la structure de renfort annulaire 10. La bande de roulement permet de fournir les caractéristiques optimales de roulage, de traction, de freinage et de comportement de la roue. Dans les exemples illustrés, la bande de roulement est prévue sous la forme d'une couche périphérique annulaire fixée contre la structure de renfort annulaire 10. En variante, la bande de roulement peut être constituée par la partie radialement extérieure de la structure de renfort annulaire 10. La bande de roulement comporte, de façon classique, des éléments de sculpture, des rainures, incisions, etc.

Les bâtons 2 peuvent être alignés selon la direction radiale et couper virtuellement l'axe de rotation, ou encore être agencés selon une direction oblique à la direction radiale, tel qu'illustré par exemple à la figure 1. Divers exemples de bâtons sont présentés par exemple dans US7,013,939 ou encore WO2008/118983. La roue peut donc prévoir différents types de bâtons, tels que ceux illustrés dans ces documents, ou d'autres.

La structure de renfort annulaire 10 supporte la charge LD de la roue. Elle est déformable de façon résiliente, en particulier pour créer une aire de contact avec la route ou autre surface de roulement. Tel que décrit dans le document US7,013,939, lorsqu'une charge LD est appliquée sur la roue par l'entremise du hub 5, la structure de renfort annulaire 10 se déforme localement au niveau de l'aire de contact (flèches G à la figure 2) tandis que la portion de la roue qui n'est pas en contact avec le sol se comporte de façon similaire à une arche, supportant la charge.

La charge de la roue passe par ailleurs par les bâtons 2. Les bâtons coopérants avec la zone d'aire de contact avec le sol ne supportent pas d'efforts de tension, et peuvent même, dans certains cas, fléchir, de sorte que la longueur Ht des bâtons dans la zone de tension est supérieure à la longueur Hb des bâtons dans la zone de compression. Au fur et à mesure de la rotation de la roue, la portion de roue agissant comme une arche change constamment. Le taux de flexion de la structure de renfort annulaire 10, et, de façon corolaire, la surface de l'aire de contact avec le sol, est proportionnelle à la charge. Les caractéristiques de déformabilité élastique de la structure de renfort annulaire 10 sous l'action de charges permettent de fournir une aire de contact avec le sol de façon similaire aux pneumatiques conventionnels, en procurant des bénéfices fonctionnels comparables.

Les bâtons sont réalisés de façon avantageuse sous la forme de feuilles de longueur L généralement selon la direction radiale R, et de largeur W, selon une direction axiale A, correspondant généralement à la largeur axiale de la structure de renfort annulaire 10. D'autres largeurs sont aussi possibles, incluant des largeurs variant le long de la direction radiale R. Les bâtons ont aussi une épaisseur K, généralement inférieure à la longueur L ou à la largeur W. Cette épaisseur est adaptée au besoin de fléchissement des bâtons au niveau de l'aire de contact avec le sol. Une épaisseur inférieure permet une fléchissement ou flexion à des niveaux d'efforts inférieurs. Tel que préalablement décrit, l'effort principal de transmission de charge se situe au niveau de l'effort de tension, illustré par les flèches T de la figure 2.

L'effort de tension des bâtons est réparti le long de la structure de renfort annulaire 10. Selon un exemple de réalisation, les bâtons sont réalisés en mélange élastomère comportant un module de tension (Module de Young) d'environ 3 MPa à 1,2 GPa. Les bâtons peuvent être renforcés si besoin.

Selon un autre exemple de réalisation, les bâtons 2 sont fixés au hub 5 par exemple en fournissant des portions élargies au niveau des extrémités radialement intérieures, pour engagement avec des fentes prévues au niveau du hub.

Les bâtons peuvent éventuellement être courbés afin de faciliter leur mise en flexion. Les bâtons sont préférentiellement prévus afin de résister aux efforts de torsion et/ou aux efforts latéraux dus par exemple aux virages.

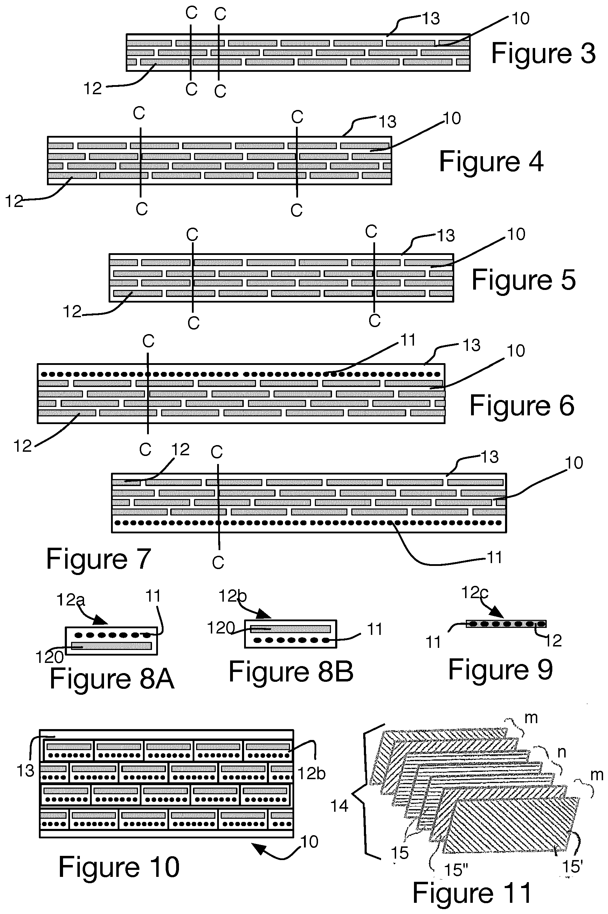

Les figures 3 à 10 illustrent des exemples de réalisation de la structure de renfort annulaire 10.

La figure 3 illustre un premier mode de réalisation d'une structure de renfort annulaire 10 selon l'invention. Selon ce mode de réalisation, des bandelettes 12 constituées d'un film thermoplastique sont disposées côte à côte à angle sensiblement proche de 0 degré, et plus largement selon un angle inférieur à sensiblement 12 degrés de la direction circonférentielle. L'ensemble est englobé dans une matrice 13 constituée d'un mélange élastomère de préférence diénique. Le positionnement des bandelettes en quinconce est réalisé par exemple par un premier trancanage débutant à un azimut donné, et un second trancanage débutant à 180 degrés. En variante, le positionnement des bandelettes est réalisé par un premier trancanage dans une direction axiale donnée, suivi d'un second trancanage dans la direction axiale opposée.

Les bandelettes d'une couche sont séparées par une zone de gomme (ou mélange élastomère) désigné ci-après pont de gomme.

Dans l'exemple de réalisation de la figure 3, le sommet 10 comporte trois couches de bandelettes 12 légèrement décalées axialement de sorte que l'écart entre les couches forme une disposition en escalier.

L'exemple de réalisation de la figure 4 comporte quatre rangées de bandelettes 12 décalées axialement de façon comparable à l'exemple de la figure 3, le décalage formant un agencement en marches d'escalier.

Dans les exemples des figures 3 et 4, le décalage latéral entre les positions des bandelettes des deux couches est inférieur à un demi pas de la bandelette.

La figure 5 illustre un autre exemple de réalisation dans lequel la structure de renfort annulaire 10 comprend quatre couches de bandelettes 12. Le décalage latéral entre les positions des bandelettes de deux couches successives est d'environ un demi pas de la bandelette. Les ponts de mélange élastomère entre les bandelettes de la première couche sont ainsi positionnés sensiblement au milieu des largeurs respectives des bandelettes de la couche adjacente.

Dans tous les exemples présentés, le plan principal de chaque couche est sensiblement axial. Un tel agencement a pour effet de recouvrir les ponts de mélange élastomère de la première couche, par les bandelettes constituant la seconde couche, et ainsi de suite, de la première à dernière couche, quel qu'en soit le nombre.

Dans les différents exemples présentés, les couches de bandelettes sont agencées de façon à ce qu'il n'y ait pas de superposition de ponts de gomme selon toute ligne ou axe virtuel C-C sensiblement perpendiculaire aux bandelettes. Ce concept peut être appliqué pour trois, quatre ou plus, couches de bandelettes. De façon préférentielle, les dispositions suivantes sont mises en œuvre :
- pour trois couches, l'axe virtuel C-C coupe au moins deux couches ;
- pour quatre couches, l'axe virtuel C-C coupe au moins trois couches ;
- pour cinq couches, l'axe virtuel C-C coupe au moins trois couches, et préférentiellement quatre couches ;
- pour six couches, l'axe virtuel C-C coupe au moins quatre couches, et préférentiellement cinq couches ;
- pour sept couches, l'axe virtuel C-C coupe au moins quatre couches, et préférentiellement cinq couches, et plus préférentiellement encore six couches.

Ainsi, le nombre de couches traversées par un axe virtuel C-C est supérieur à N/2, N étant le nombre de couches de bandelettes.

Les figures 6 et 7 présentent des exemples de réalisation similaires à celui de la figure 4, comprenant en plus une couche de renforts filaires 11 circonférentiels. Dans l'exemple de la figure 6, la couche de renforts est prévue radialement extérieurement aux bandelettes. Dans l'exemple de la figure 7, la couche de renforts est prévue radialement intérieurement aux bandelettes. Les fils 11 sont préférentiellement des fils textiles. En plus d'apporter une certaine rigidité, les fils circonférentiels permettent de protéger les couches radialement internes. Une autre variante, non illustrée, prévoit deux couches de renforts circonférentiels 11, l'une radialement intérieurement aux bandelettes, et l'autre radialement extérieurement aux bandelettes. Les fils circonférentiels peuvent encore être agencés entre une ou plusieurs couches de bandelettes.

Un deuxième mode de réalisation des bandelettes est présenté en relation avec les figures 8A, 8B et 9. La figure 8A illustre un exemple de réalisation dans lequel un film thermoplastique 120 tel que préalablement décrit est surmonté d'une couche 11 de fils de renfort, préférentiellement textiles. L'ensemble est englobé dans une matrice constituée d'un mélange élastomère de préférence diénique et forme une bandelette composite 12a. La figure 8B présente une variante de bandelette composite 12b avec une géométrie inversée, la couche de fils 11 étant agencée radialement intérieurement par rapport au film thermoplastique 120.

La figure 9 illustre un troisième exemple de bandelette composite 12c dans lequel une couche de fils 11 de renfort est intégrée directement dans un film thermoplastique 120. Cette variante présente les avantages supplémentaires d'une plus grande légèreté et d'une très grande compacité.

La figure 10 illustre un exemple de disposition comprenant quatre couches de bandelettes, utilisant des bandelettes telles que celles présentées en relation avec la figure 8B ; de manière équivalente, il pourrait s'agir des bandelettes présentées aux figures 8A ou 9.

Les bandelettes composites permettent de simplifier les étapes de fabrication de la zone sommet de la roue. En modifiant uniquement le type de bandelette, sans changer les autres éléments architecturaux de la roue, les bandelettes composites permettent de faire varier les caractéristiques de la zone sommet en fonction des besoins, conférant une grande souplesse de conception.

Pour chacun des modes de réalisation préalablement évoqués, différents paramètres peuvent être modifiés tels que la largeur relative des éléments constituants, des largeurs différentes sur des couches différentes, les épaisseurs de composants, le nombre d'alignements de bandelettes qui peut être supérieur, en particulier pour des roues spécifiques comme par exemple pour véhicules à usage industriel au autre.

Le film thermoplastique des bandelettes de renfort 12, 12a, 12b, 12c est avantageusement réalisé à l'aide de matériaux parmi les suivants: polyester bi-étiré ou mono-étiré stabilisé thermiquement, polyamide (par exemple nylon 6.6). En variante, ces matériaux peuvent être chargés d'inclusions isotropes ou anisotropes ou de forme fibrillaire.

Les bandelettes 12, 12a, 12b, 12c présentent un rapport entre les dimensions longueur/largeur et largeur/épaisseur supérieur ou égal à 5. Le film thermoplastique présente un module dans la direction principale (correspondant à la direction circonférentielle du pneumatique) et dans la direction transverse supérieur à 0,9 GPa et de préférence supérieur à 2GPa.

La matrice 13 ou dans laquelle sont intégrées les bandelettes 12 ou 12a ou 12b ou 12c est constituée d'un mélange élastomère de préférence diénique présentant un module à 10% d'allongement classique (typiquement entre 3 et 20 MPa), ou préférentiellement rigide (c'est-à-dire supérieur à 20 MPa). Un système adhésif adapté selon la nature des renforts et des mélanges peut être utilisé afin d'obtenir la cohésion nécessaire. Ce système adhésif est par exemple obtenu par une préparation ou activation des surfaces physiquement ou chimiquement puis par l'utilisation d'un adhésif.

Les câbles de renfort 11 sont constitués des matériaux parmi les suivants : aramide, polyester (PET, PEN, PTT), nylon, rayonne, polycétone, fil ou câble métallique, ou composite (verre ou carbone avec résine), ou encore un renfort hybride constitué d'une combinaison des matériaux précédents.

Un troisième mode de réalisation des bandelettes 14 est décrit ci-dessous, et illustré par la figure 11. Les bandelettes 14 de renfort sont constituées par un stratifié d'au moins 3 couches composites, chaque couche composite comprenant des fibres (15, 15', 15") à haut module orientées, parallèles entre elles et formant un angle α avec la direction circonférentielle (c'est-à-dire la direction longitudinale de la bandelette), enrobées d'une matrice polymérique. De préférence, l'angle α formé par les fibres avec la direction circonférentielles va de -90° à 90°.

Préférentiellement le stratifié comprend :
- n couches composites intérieures ayant des fibres 15 dont l'angle avec la direction circonférentielle est 0°, n étant un nombre supérieur ou égal à 1, de préférence allant de 1 à 20, plus préférentiellement allant de 1 à 12, encore plus préférentiellement de 1 à 6, ces couches composites intérieures étant juxtaposées les unes aux autres et encadrées de part et d'autre respectivement par m couches composites extérieures,
- chaque couche composite extérieure ayant des fibres 15', 15" formant un angle α avec la direction circonférentielle distinct de 0°, m allant de 1 à 8, l'angle α des fibres 15', 15" des couches composites extérieures successives disposées d'un même côté des couches composites intérieures étant identique ou différent, et l'angle α des fibres 15', 15" de deux couches composites extérieures disposées symétriquement de chaque côté des couches composites intérieures étant identique.

Le nombre total de couches dans le stratifié est donc de n+ 2m.

La figure 11 illustre une variation de réalisation dans lequel n est égal à 3 et m est égal à 2. Selon une variation de réalisation préférentiel de l'invention, n et m sont égaux à 1. Plus préférentiellement l'angle α des fibres 15', 15" des couches composites extérieures est égal à 45° ou à -45°. Selon un autre mode de réalisation préférentiel de l'invention, n est égal à 1 et m est égal à 2.

Plus préférentiellement l'angle α des fibres des deux couches juxtaposées extérieures est égal à 45° ou à -45°.

Selon un autre mode de réalisation de l'invention, le stratifié comprend :
- n couches composites intérieures ayant des fibres 15 dont l'angle avec la direction circonférentielle est 0°, n étant un nombre supérieur ou égal à 3, de préférence allant de 3 à 20, plus préférentiellement allant de 3 à 12, encore plus préférentiellement de 3 à 6, ces couches composites intérieures étant juxtaposées les unes aux autres et encadrées de part et d'autre respectivement par m couches composites extérieures,
- chaque couche composite extérieure ayant des fibres 15', 15" formant un angle α avec la direction circonférentielle distinct de 0°, m allant de 1 à 8, l'angle α des fibres 15', 15" des couches composites extérieures successives disposées d'un même côté des couches composites intérieures étant identique ou différent, et l'angle α des fibres 15', 15" de deux couches composites extérieures disposées symétriquement de chaque côté des couches composites intérieures étant identique en valeur absolue mais de signe opposé.

Les bandelettes composites peuvent être réalisées à partir de couches composites préimprégnées NTPT ThinPreg 450™ ou NTPT ThinPreg 402™. (qui peuvent être obtenues notamment en l'application du procédé décrit dans le document WO 2016/198171). Les couches composites préimprégnées sont déposées crues ou non polymérisées selon les angles souhaités de stratification et forment une laize d'une largeur supérieure à celle des bandelettes. La laize stratifiée est découpée en bandelette crue ou non polymérisée de largeur souhaitée. Les bandelettes crues sont déposées par enroulement (avec décalage axial à chaque tour) sur un tambour de grand diamètre (ie 2 mètre de diamètre). Les bandelettes sont cuites sous vide (-850mBar) et sous pression (5 bars) à l'aide des périphériques de cuisson usuels (tels que tissu d'arrachage, feutre de drainage, film anti-adhésif micro-perforé ou non, film à vide etc.). Selon un autre mode de réalisation la laize stratifiée est déposée sur un tambour de grand diamètre et cuite sous vide (-850mBar) et sous pression (5 bars) à l'aide des périphériques de cuisson usuels. Après cuisson, la laize est découpée en bandelettes. De préférence, les bandelettes présentent une épaisseur inférieure ou égale à 1 mm, et plus préférentiellement inférieure ou égale à 0,7 mm, et encore plus avantageusement inférieure ou égale à 0,5 mm.

Abordons sur les éléments constitutifs des bandelettes 14. La matrice polymérique de chaque couche composite de stratifié d'une bandelette comprend un polymère thermodurcissable ou un polymère thermoplastique, utilisé seul respectivement ou en coupage avec d'autres polymères. Préférentiellement la matrice polymérique peut être choisie parmi les résines thermodurcissables de type polyépoxides, polyester insaturés, vinylester, cyanate ester, bismalémimides, les polyuréthanes et un coupage de ces résines, ou bien parmi les résines thermoplastiques comme les polyesters (PET, PBT, PEN, PBN), les polyamides (nylon, aramide), les polyimides, les polyethersulfones, les polyphénylènesulfone, les polycétones (PK, PEEK). Conviennent particulièrement parmi les résines précitées, les résines thermodurcissables ayant une température de transition vitreuse supérieure ou égale à 160°C et les résines thermoplastiques ayant une température de fusion supérieure ou égale à 180°C. Notons que des charges renforçantes (silice, noir de carbone), ou des charges thermoplastiques (Orgasol de chez Arkema) ou des charges élastomèriques (Kane Ace de chez Kaneka) pourront être ajoutées aux résines ci-dessus. Conviennent particulièrement à l'invention des couches composites possédant une masse surfacique d'environ 200g/m² et une épaisseur avant cuisson d'environ 0,2 mm. De préférence, on utilise des couches plus fines ayant une masse surfacique inférieure ou égale à 80g/m², plus préférentiellement cette masse allant de 18 g/m² à 80g/m², et une épaisseur avant cuisson inférieure à 0,06 mm. L'homme de l'art saura adapter le nombre de couches composites selon la masse surfacique de ces couches composites.

Les fibres 15', 15" de chaque couche composite de stratifié comprennent des fibres de haut module. On entendra dans la présente description, par haut module, un module d'extension (module d'Young) supérieur ou égal à 55 GPa. Selon une variante de réalisation préférée de l'invention les fibres à haut module comprennent des fibres de verre, De façon préférentielle, les fibres de verre sont majoritaires, c'est-à-dire représente plus de 50 % des fibres d'une même couche. Plus préférentiellement encore, les fibres de chaque couche composite de stratifié sont constitués par des fibres de verre. Préférentiellement, le ratio volumique matrice polymérique/fibres de chaque couche composite de stratifié allant de 35/65 à 70/30, et étant préférentiellement d'environ 45/55.

Selon une autre variante de réalisation préférée de l'invention, les fibres à haut module comprennent des fibres de carbone. De façon préférentielle, les fibres de carbone sont majoritaires, c'est-à-dire représente plus de 50 % des fibres d'une même couche. Plus préférentiellement encore, les fibres de chaque couche composite de stratifié sont constitués par des fibres de carbone. Préférentiellement, le ratio volumique matrice polymérique/fibres de chaque couche composite de stratifié allant de 35/65 à 60/40, et étant préférentiellement d'environ 50/50. Selon d'autres variantes de réalisation préférées de l'invention, les fibres à haut module comprennent des fibres aramide, des fibres de basalte ou des fibres de quartz.

L'exemple qui suit permet d'illustrer l'invention, cette dernière ne saurait cependant être limitée à cet exemple.

Le sommet d'une roue élastique comprend sept couches de bandelettes décalées entre elles. Les bandelettes sont constituées par un stratifié comprenant cinq couches composites enrobées d'une matrice polymérique thermodurcissable constituée par une résine polyépoxide (couches composites commercialisées par la société NTPT sous le nom commercial « ThinPreg 402™ »):
- une couche composite intérieure ayant des fibres orientées, parallèles entre elles et formant un angle avec la direction circonférentielle de 0°,
- et deux couches composites extérieures successives disposées de chaque côté de la couche composite intérieure, les deux couches adjacentes à la couche composite intérieure ayant des fibres orientées, parallèles entre elles et formant un angle de -45° avec la direction circonférentielle et les deux couches les plus extérieures ayant des fibres orientées, parallèles entre elles et formant un angle de +45° avec la direction circonférentielle,
- chaque couche composite a une épaisseur inférieure ou égale à 80 microns et les bandelettes une épaisseur inférieure ou égale à 0,25 mm

Les bandelettes comprennent des fibres de carbone « T700SC » commercialisé par la société Toray ratio volumique matrice polymérique/fibres de chaque couche composite de 50/50 et une épaisseur de 0,25 mm. La matrice de compositions de caoutchouc utilisée ici, est une composition de haute rigidité (module MA10 égal à environ 55 MPa) typiquement du type pour bourrelets (5) de pneumatique, à base de caoutchouc naturel, de noir de carbone (environ 75 pce), de résine renforçante (environ 20 pce de résine phénolique associés à environ 8 pce de H3M et HMT), d'antioxydant, d'un système de vulcanisation à fort taux de soufre (environ 5 pce) et des additifs usuels de vulcanisation ; elle comporte en outre environ 10 pce d'huile paraffinique et 8 pce de résine tackifiante (résine butyl-phénol-acétylène). L'adhésion entre les couches de bandelettes et la matrice de composition de caoutchouc est assurée par une colle du type RFL qui a été déposée de manière connue sur les bandelettes.

Un quatrième mode de réalisation des bandelettes 14 est décrit ci-dessous, et illustré par la même figure 11. Les bandelettes 14 de renfort sont constituées par un stratifié d'au moins 3 couches composites, chaque couche composite comprenant des fibres 15, 15', 15" à bas module orientées, parallèles entre elles et formant un angle α avec la direction circonférentielle, enrobées d'une matrice polymérique. De préférence, l'angle α formé par les fibres avec la direction circonférentielles va de -90° à 90°.

Dans les paragraphes suivants, du fait du choix de fibres à bas module au lieu de fibres à haut module comme dans le troisième mode de réalisation, l'attention du lecteur est attirée en particulier sur les différences du quatrième mode de réalisation par rapport au troisième mode.

La figure 11 illustre un mode de réalisation dans lequel n est égal à 3 et m est égal à 2. Selon une variation de réalisation préférentiel de l'invention, n et m sont égaux à 1. Plus préférentiellement l'angle α des fibres 15', 15" des couches composites extérieures est égal à 45° ou à -45°. Selon un autre variation de réalisation préférentiel de l'invention, n est égal à 1 et m est égal à 2. Plus préférentiellement l'angle α des fibres 15', 15" des deux couches juxtaposées extérieures est égal à 45° ou à -45°.

Les bandelettes composites peuvent être réalisées à partir de couches composites préimprégnées NTPT 450™ ou NTPT ThinPreg 402™ (qui peuvent être obtenues notamment en l'application du procédé décrit dans le document WO 2016/198171).

Les couches composites préimprégnées sont déposées crues ou non polymérisées selon les angles souhaités de stratification et forment une laize d'une largeur supérieure à celle des bandelettes. La laize stratifiée est découpée en bandelette crue ou non polymérisée de largeur souhaitée. Les bandelettes crues sont enroulées (avec décalage axial à chaque tour) sur un tambour de grand diamètre (c'est-à-dire 2 mètre de diamètre). Les bandelettes sont cuites sous vide (-850 mBar) et sous pression (5 bars) à l'aide des périphériques de cuisson usuels (tels que tissu d'arrachage, feutre de drainage, film anti-adhésif micro-perforé ou non, film à vide etc.).

Selon une autre variation de réalisation la laize stratifiée est déposée sur un tambour de grand diamètre et cuite sous vide (-850 mBar) et sous pression (5 bars) à l'aide des périphériques de cuisson usuels. Après cuisson, la laize est découpée en bandelettes. De préférence, les bandelettes présentent une épaisseur inférieure ou égale à 1 mm, et plus préférentiellement inférieure ou égale à 0,7 mm.

La matrice polymérique de chaque couche composite de stratifié d'une bandelette comprend un polymère thermodurcissable seul ou en coupage avec d'autres polymères. Préférentiellement la matrice polymérique peut être choisie parmi les résines thermodurcissables de type polyépoxides, polyester insaturés, vinylester, cyanate ester, bismalémimides, les polyuréthanes et un coupage de ces résines, Conviennent particulièrement parmi les résines précités, les résines thermodurcissables ayant une température de transition vitreuse supérieure ou égale à 160°C. Notons que des charges renforçantes (silice, noir de carbone), ou des charges thermoplastiques (Orgasol de chez Arkema) ou des charges élastomèriques (Kane Ace de chez Kaneka) pourront être ajoutées aux résines thermodurcissables ci-dessus. Ces couches composites possèdent de préférence une masse surfacique d'environ 200g/m² et une épaisseur avant cuisson d'environ 0,2 mm.

De préférence, on utilise des couches plus fines ayant une masse surfacique inférieure ou égale à 80g/m², plus préférentiellement cette masse allant de 18 g/m² à 80g/m², et une épaisseur avant cuisson inférieure à 0,06 mm. L'homme de l'art saura adapter le nombre de couches composites selon la masse surfacique de ces couches composites.

Les fibres de chaque couche composite de stratifié comprennent des fibres de bas module. On entendra dans la présente description, par bas module, un module d'extension (module d'Young) inférieur ou égal à 30 GPa, de préférence allant de 6 GPa à 30 GPa.

Selon une variation de réalisation préférée de l'invention les fibres à bas module de chaque couche composite de stratifié comprennent des fibres en polyéthylène téréphtalate. De façon préférentielle, les fibres en polyéthylène téréphtalate sont majoritaires, c'est-à-dire représente plus de 50 % des fibres d'une même couche. Plus préférentiellement encore, les fibres de chaque couche composite de stratifié sont constituées par des fibres en polyéthylène téréphtalate. Selon d'autres variations de réalisation préférées de l'invention, les fibres de chaque couche composite de stratifié comprennent des fibres en polyamide (comme le PA66, PA46, PA6, PA10 semi-aromatique), des fibres en cellulose ou rayonne, ou des fibres en polyéthylène UHMWPE comme la fibre Dyneema ou encore des fibres thermoplastiques de bas module.

Chacun de ces types de de fibres pouvant être utilisées préférentiellement en étant majoritaire, c'est-à-dire représentant plus de 50 % des fibres d'une même couche, et encore plus préférentiellement, chacun de ces types de fibres constituant la totalité des fibres de de chaque couche composite de stratifié. Selon une variation préférée de l'invention, le ratio volumique matrice polymérique/fibres de chaque couche composite de stratifié va de 25/75 à 55/45, et étant préférentiellement d'environ 45/55.

## Revendications

1. Roue (1) non-pneumatique comprenant une structure de renfort annulaire (10) réalisée à partir d'au moins un mélange élastomère (13), agencée radialement à l'intérieur d'une bande de roulement (7), ladite structure de renfort annulaire (10) comprenant une pluralité de bandelettes de renfort (12) disposées en couches, lesdites bandelettes de renfort (12) de chacune des couches étant disposées de manière juxtaposée axialement et étant orientées selon une direction sensiblement circonférentielle, la structure de renfort annulaire (10) comprenant N couches de bandelettes de renfort (12) superposées radialement, N étant supérieur ou égal à trois, en coupe transversale de la roue non-pneumatique un axe virtuel (C-C) sensiblement perpendiculaire aux bandelettes de renfort (12) et sensiblement parallèle à la direction radiale coupe au moins N-1 bandelettes en toute position axiale dudit axe virtuel dans la zone de renfort annulaire (10), ladite roue non-pneumatique étant **caractérisée en ce que** les bandelettes de renfort (12) sont constituées d'un film thermoplastique présentant un module supérieur à 0,9 GPa et de préférence supérieur à 2 GPa dans la direction principale correspondant à la direction circonférentielle de la roue non-pneumatique et dans la direction transverse, et **en ce que** lesdites bandelettes de renfort (12) sont séparées axialement par des ponts dudit mélange élastomère et sont enrobées dudit mélange élastomère (13).

2. Roue (1) non-pneumatique selon la revendication 1, dans laquelle le recouvrement moyen entre les bandelettes de renfort (12) de deux couches de bandelettes de renfort voisines superposées radialement est supérieur à 20%, et plus préférentiellement supérieur à 40% et inférieur à 90%.

3. Roue (1) non-pneumatique comprenant une structure de renfort annulaire (10) réalisée à partir d'au moins un mélange élastomère (13), agencée radialement à l'intérieur d'une bande de roulement (7), ladite structure de renfort annulaire (10) comprenant une pluralité de bandelettes de renfort (14) disposées en couches, lesdites bandelettes de renfort (14) de chacune des couches étant disposées de manière juxtaposée axialement et étant orientées selon une direction sensiblement circonférentielle, la structure de renfort annulaire (10) comprenant N couches de bandelettes de renfort (14) superposées radialement, N étant supérieur ou égal à trois, en coupe transversale de la roue non-pneumatique un axe virtuel (C-C) sensiblement perpendiculaire aux bandelettes de renfort (14) et sensiblement parallèle à la direction radiale coupe au moins N-1 bandelettes en toute position axiale dudit axe virtuel dans la zone de renfort annulaire (10), ladite roue (1) non-pneumatique étant **caractérisée en ce que** chaque couche de bandelettes de renfort est noyée dans une matrice de composition de caoutchouc qui présente, à l'état réticulé, un module sécant en extension à 10% d'allongement supérieur ou égal à 10 MPa, **en ce que** chaque bandelette de renfort (14) est constituée par un stratifié d'au moins 3 couches composites, chaque couche composite comprenant des fibres présentant un module d'extension supérieur ou égal à 55 GPa ou inférieur ou égal à 30 GPa orientées parallèles entre elles et formant un angle α avec la direction circonférentielle, enrobées d'une matrice polymérique, et **en ce que** les bandelettes de renfort (14) sont séparées axialement par des ponts dudit mélange élastomère et sont enrobées dudit mélange élastomère (13).

4. Roue (1) non-pneumatique selon la revendication 3, dans laquelle les bandelettes de renfort (14) sont disposées sur quatre couches de bandelettes, les bandelettes de renfort (14) de chaque couche de bandelettes recouvrant les bandelettes de renfort (14) de la couche de bandelettes qui lui est radialement intérieure d'au moins 20% et d'au plus 80%.

5. Roue (1) non-pneumatique selon l'une quelconque des revendications 3 ou 4, dans laquelle, pour chaque couche composite du stratifié, l'angle α formé par les fibres avec la direction circonférentielles va de -90° à 90°.

6. Roue (1) non-pneumatique selon l'une quelconque des revendications 3 à 5, dans laquelle chaque stratifié comprend :
- n couches composites intérieures ayant des fibres (15) dont l'angle α avec la direction circonférentielle est 0°, n étant un nombre supérieur ou égal à 1, de préférence allant de 1 à 20, ces couches composites intérieures étant juxtaposées les unes aux autres et encadrées de part et d'autre respectivement par m couches composites extérieures,
- chaque couche composite extérieure ayant des fibres (15', 15") formant un angle α avec la direction circonférentielle distinct de 0°, m allant de 1 à 8, l'angle α des fibres (15', 15") des couches composites extérieures successives disposées d'un même côté des couches composites intérieures étant identique ou différent, et l'angle α des fibres (15', 15") de deux couches composites extérieures disposées symétriquement de chaque côté des couches composites intérieures étant identique.

7. Roue (1) non-pneumatique selon l'une quelconque des revendications 3 à 5, dans laquelle chaque stratifié comprend :
- n couches composites intérieures ayant des fibres dont l'angle α avec la direction circonférentielle est 0°, n étant un nombre supérieur ou égal à 3, de préférence allant de 3 à 20, ces couches composites intérieures étant juxtaposées les unes aux autres et encadrées de part et d'autre respectivement par m couches composites extérieures,
- chaque couche composite extérieure ayant des fibres (15', 15") formant un angle α avec la direction circonférentielle distinct de 0°, m allant de 1 à 8, l'angle α des fibres (15', 15") des couches composites extérieures successives disposées d'un même côté des couches intérieures étant identique ou différent, et l'angle α des fibres (15', 15") de deux couches composites extérieures disposées symétriquement de chaque côté des couches composites intérieures étant identique en valeur absolue mais de signe opposé.

8. Roue (1) non-pneumatique selon la revendication 6, dans laquelle le nombre n va de 1 à 12, préférentiellement de 1 à 6.

9. Roue (1) non-pneumatique selon la revendication 6, dans laquelle n et m sont égaux à 1.

10. Roue (1) non-pneumatique selon l'une quelconque des revendications 6 ou 7, dans laquelle l'angle α des fibres (15', 15") des couches composites extérieures est égal à 45° ou à -45°.

11. Roue (1) non-pneumatique selon la revendication 6, dans laquelle n est égal à 1 et m est égal à 2.

12. Roue (1) non-pneumatique selon l'une quelconque des revendications précédentes, dans laquelle le rapport de forme longueur/largeur et largeur/épaisseur des bandelettes de renfort (12, 14) est supérieur ou égal à 5.

## Patentansprüche

1. Nicht-pneumatisches Rad (1), welches eine aus wenigstens einer Elastomermischung (13) hergestellte ringförmige Verstärkungsstruktur (10) umfasst, die radial innerhalb eines Laufstreifens (7) angeordnet ist, wobei die ringförmige Verstärkungsstruktur (10) mehrere Verstärkungsstreifen (12) umfasst, die in Schichten angeordnet sind, wobei die Verstärkungsstreifen (12) jeder der Schichten axial nebeneinanderliegend angeordnet sind und in einer im Wesentlichen umlaufenden Richtung ausgerichtet sind, wobei die ringförmige Verstärkungsstruktur (10) N Schichten von Verstärkungsstreifen (12) umfasst, die radial übereinanderliegen, wobei N größer oder gleich drei ist, wobei im Querschnitt des nicht-pneumatischen Rades eine virtuelle Achse (C-C), die im Wesentlichen senkrecht zu den Verstärkungsstreifen (12) und im Wesentlichen parallel zu der radialen Richtung ist, wenigstens N-1 Streifen in jeder axialen Position der virtuellen Achse in dem ringförmigen Verstärkungsbereich (10) schneidet, wobei das nicht-pneumatische Rad **dadurch gekennzeichnet ist, dass** die Verstärkungsstreifen (12) aus einer thermoplastischen Folie bestehen, die einen Modul, der größer als 0,9 GPa und vorzugsweise größer als 2 GPa ist, in der Hauptrichtung, die der Umfangsrichtung des nicht-pneumatischen Rades entspricht, und in der Querrichtung aufweist, und dadurch, dass die Verstärkungsstreifen (12) axial durch Brücken aus der Elastomermischung getrennt sind und von der Elastomermischung (13) umhüllt sind.

2. Nicht-pneumatisches Rad (1) nach Anspruch 1, wobei die mittlere Überdeckung zwischen den Verstärkungsstreifen (12) von zwei radial übereinander angeordneten benachbarten Schichten von Verstärkungsstreifen größer als 20 % und stärker bevorzugt größer als 40 % und kleiner als 90 % ist.

3. Nicht-pneumatisches Rad (1), welches eine aus wenigstens einer Elastomermischung (13) hergestellte ringförmige Verstärkungsstruktur (10) umfasst, die radial innerhalb eines Laufstreifens (7) angeordnet ist, wobei die ringförmige Verstärkungsstruktur (10) mehrere Verstärkungsstreifen (14) umfasst, die in Schichten angeordnet sind, wobei die Verstärkungsstreifen (14) jeder der Schichten axial nebeneinanderliegend angeordnet sind und in einer im Wesentlichen umlaufenden Richtung ausgerichtet sind, wobei die ringförmige Verstärkungsstruktur (10) N Schichten von Verstärkungsstreifen (14) umfasst, die radial übereinanderliegen, wobei N größer oder gleich drei ist, wobei im Querschnitt des nicht-pneumatischen Rades eine virtuelle Achse (C-C), die im Wesentlichen senkrecht zu den Verstärkungsstreifen (14) und im Wesentlichen parallel zu der radialen Richtung ist, wenigstens N-1 Streifen in jeder axialen Position der virtuellen Achse in dem ringförmigen Verstärkungsbereich (10) schneidet, wobei das nicht-pneumatische Rad (1) **dadurch gekennzeichnet ist, dass** jede Schicht von Verstärkungsstreifen in eine Matrix aus einer Kautschukzusammensetzung eingebettet ist, welche im vernetzten Zustand einen Sekantendehnungsmodul bei 10 % Dehnung aufweist, der größer oder gleich 10 MPa ist, und dadurch, dass jeder Verstärkungsstreifen (14) aus einem Laminat aus mindestens 3 Verbundschichten besteht, wobei jede Verbundschicht Fasern umfasst, die einen Dehnungsmodul aufweisen, der größer oder gleich 55 GPa oder kleiner oder gleich 30 GPa ist, parallel zueinander ausgerichtet sind und einen Winkel α mit der Umfangsrichtung bilden und von einer Polymermatrix umhüllt sind, und dadurch, dass die Verstärkungsstreifen (14) axial durch Brücken aus der Elastomermischung getrennt sind und von der Elastomermischung (13) umhüllt sind.

4. Nicht-pneumatisches Rad (1) nach Anspruch 3, wobei die Verstärkungsstreifen (14) auf vier Schichten von Streifen angeordnet sind, wobei die Verstärkungsstreifen (14) jeder Schicht von Streifen die Verstärkungsstreifen (14) der Schicht von Streifen, die ihr radial innen benachbart ist, auf mindestens 20 % und höchstens 80 % überdecken.

5. Nicht-pneumatisches Rad (1) nach einem der Ansprüche 3 oder 4, wobei für jede Verbundschicht des Laminats der Winkel α, der von den Fasern mit der Umfangsrichtung gebildet wird, -90° bis 90° beträgt.

6. Nicht-pneumatisches Rad (1) nach einem der Ansprüche 3 bis 5, wobei jedes Laminat umfasst:
- n innere Verbundschichten, die Fasern (15) aufweisen, deren Winkel α mit der Umfangsrichtung 0° beträgt, wobei n eine Zahl größer oder gleich 1 ist und vorzugsweise 1 bis 20 beträgt, wobei diese inneren Verbundschichten nebeneinanderliegend angeordnet sind und auf beiden Seiten von jeweils m äußeren Verbundschichten umrahmt werden,
- wobei jede äußere Verbundschicht Fasern (15', 15") aufweist, die einen Winkel α mit der Umfangsrichtung bilden, der von 0° verschieden ist, wobei m 1 bis 8 beträgt, wobei der Winkel α der Fasern (15', 15") der aufeinander folgenden äußeren Verbundschichten, die auf derselben Seite der inneren Verbundschichten angeordnet sind, identisch oder unterschiedlich ist, und wobei der Winkel α der Fasern (15', 15") von zwei äußeren Verbundschichten, die symmetrisch auf den beiden Seiten der inneren Verbundschichten angeordnet sind, identisch ist.

7. Nicht-pneumatisches Rad (1) nach einem der Ansprüche 3 bis 5, wobei jedes Laminat umfasst:
- n innere Verbundschichten, die Fasern aufweisen, deren Winkel α mit der Umfangsrichtung 0° beträgt, wobei n eine Zahl größer oder gleich 3 ist und vorzugsweise 3 bis 20 beträgt, wobei diese inneren Verbundschichten nebeneinanderliegend angeordnet sind und auf beiden Seiten von jeweils m äußeren Verbundschichten umrahmt werden,
- wobei jede äußere Verbundschicht Fasern (15', 15") aufweist, die einen Winkel α mit der Umfangsrichtung bilden, der von 0° verschieden ist, wobei m 1 bis 8 beträgt, wobei der Winkel α der Fasern (15', 15") der aufeinander folgenden äußeren Verbundschichten, die auf derselben Seite der inneren Verbundschichten angeordnet sind, identisch oder unterschiedlich ist, und wobei der Winkel α der Fasern (15', 15") von zwei äußeren Verbundschichten, die symmetrisch auf den beiden Seiten der inneren Verbundschichten angeordnet sind, dem absoluten Betrag nach identisch ist, jedoch ein entgegengesetztes Vorzeichen aufweist.

8. Nicht-pneumatisches Rad (1) nach Anspruch 6, wobei die Anzahl n 1 bis 12, vorzugsweise 1 bis 6 beträgt.

9. Nicht-pneumatisches Rad (1) nach Anspruch 6, wobei n und m gleich 1 sind.

10. Nicht-pneumatisches Rad (1) nach einem der Ansprüche 6 oder 7, wobei der Winkel α der Fasern (15', 15") der äußeren Verbundschichten gleich 45° oder -45° ist.

11. Nicht-pneumatisches Rad (1) nach Anspruch 6, wobei n gleich 1 ist und m gleich 2 ist.

12. Nicht-pneumatisches Rad (1) nach einem der vorhergehenden Ansprüche, wobei das Formverhältnis Länge/Breite und Breite/Dicke der Verstärkungsstreifen (12, 14) größer oder gleich 5 ist.

## Claims

1. Non-pneumatic wheel (1) comprising an annular reinforcing structure (10) produced from at least one elastomer compound (13), arranged radially on the inside of a tread (7), the said annular reinforcing structure (10) comprising a plurality of reinforcing strips (12) arranged in layers, the said reinforcing strips (12) of each of the layers being arranged in an axial juxtaposition and being oriented in a substantially circumferential direction, the annular reinforcing structure (10) comprising N radially superposed layers of reinforcing strips (12), N being greater than or equal to three, a virtual axis (C-C) substantially perpendicular to the reinforcing strips (12) and substantially parallel to the radial direction intersects at least N-1 strips in any axial position of the said virtual axis in the annular reinforcing structure (10), said non-pneumatic wheel being **characterized in that** the reinforcing strips (12) are made of a thermoplastic film having a modulus higher than 0.9 GPa and preferably more than 2 GPa in the main direction corresponding to the circumferential direction of the non-pneumatic wheel and in the transverse direction, and **in that** the said reinforcing strips (12) are axially separated by bridges of said elastomer compound and are coated with said elastomer compound (13).

2. Non-pneumatic wheel (1) according to claim 1, in which the mean overlap between the reinforcing strips of two radially superposed adjacent layers of reinforcing strips (12) is greater than 20% and more preferably is greater than 40% and less than 90%.

3. Non-pneumatic wheel (1) comprising an annular reinforcing structure (10) produced from at least one elastomer compound (13), arranged radially on the inside of a tread (7), the said annular reinforcing structure (10) comprising a plurality of reinforcing strips (14) arranged in layers, the said reinforcing strips (14) of each of the layers being arranged in an axial juxtaposition and being oriented in a substantially circumferential direction, the annular reinforcing structure (10) comprising N radially superposed layers of reinforcing strips (14), N being greater than or equal to three, a virtual axis (C-C) substantially perpendicular to the reinforcing strips (14) and substantially parallel to the radial direction intersects at least N-1 strips in any axial position of the said virtual axis in the annular reinforcing structure (10), said non-pneumatic wheel (1) being **characterized in that** each layer of reinforcing strips is embedded in a matrix of rubber composition which, when cross-linked, has a secant tensile modulus at 10% elongation greater than or equal to 10 MPa, and **in that** each reinforcing strips (14) is made of a laminate of at least 3 composite layers, each composite layer comprising mutually-parallel oriented fibres having an extension modulus more than or equal to 55 GPa or less than or equal to 30 GPa and making an angle α with the circumferential direction, coated in a polymer matrix, and **in that** said reinforcing strips (14) are axially separated by bridges of said elastomer compound and are coated with said elastomer composition (13)

4. Non-pneumatic wheel (1) according to Claim 3, in which the reinforcing strips (14) are arranged in four layers of strips, the reinforcing strips (14) of each layer of strips overlapping the reinforcing strips (14) of the layer of strips that is radially on the inside of it by at least 20% and at most 80%.

5. Non-pneumatic wheel (1) according to Claim 3 or 4, in which, for each composite layer of the laminate, the angle α formed by the fibres with the circumferential direction ranges from -90° to 90°.

6. Non-pneumatic wheel (1) according to any one of Claims 3 to 5, in which each laminate comprises:
- n interior composite layers having fibres (15) of which the angle α with the circumferential direction is 0°, n being a number greater than or equal to 1, preferably ranging from 1 to 20, these interior composite layers being juxtaposed with one another and flanked on each side respectively by m exterior composite layers,
- each exterior composite layer having fibres (15', 15") forming an angle α other than 0° with the circumferential direction, m ranging from 1 to 8, the angle α of the fibres (15', 15") of the successive exterior composite layers laid on the one same side of the interior composite layers being identical or different, and the angle α of the fibres (15', 15") of two exterior composite layers laid symmetrically one on each side of the interior composite layers being identical.

7. Non-pneumatic wheel (1) according to any one of Claims 3 to 5, in which each laminate comprises:
- n interior composite layers having fibres of which the angle α with the circumferential direction is 0°, n being a number greater than or equal to 3, preferably ranging from 3 to 20, these interior composite layers being juxtaposed with one another and flanked on each side respectively by m exterior composite layers,
- each exterior composite layer having fibres (15', 15") forming an angle α other than 0° with the circumferential direction, m ranging from 1 to 8, the angle α of the fibres (15', 15") of the successive exterior composite layers laid on the one same side of the interior layers being identical or different, and the angle α of the fibres (15', 15") of two exterior composite layers laid symmetrically one on each side of the interior composite layers being identical in terms of absolute value, but of opposite sign.

8. Non-pneumatic wheel (1) according to claim 6, in which the number n ranges from 1 to 12, preferably from 1 to 6.

9. Non-pneumatic wheel (1) according to claim 6, in which n and m are equal to 1.

10. Non-pneumatic wheel (1) according to Claims 6 or 7, in which the angle α of the fibres (15', 15") of the exterior composite layers is equal to 45° or to -45°.

11. Non-pneumatic wheel (1) according to claim 6, in which n is equal to 1 and m is equal to 2.

12. Non-pneumatic wheel (1) according to any one of the preceding claims, in which the length/width and width/thickness aspect ratio of the reinforcing strips (12, 14) is greater than or equal to 5
